# EUROPÄISCHE PATENTSCHRIFT

(11) **EP 0 609 793 B1**
(45) Veröffentlichungstag und Bekanntmachung des Hinweises auf die Patenterteilung: **09.07.1997**
(21) Anmeldenummer: 94101337.7
(22) Anmeldetag: 29.01.1994
(51) Int. Cl.: C08F 8/28, C09D 133/06

(54) **Bei Raumtemperatur vernetzbares wässriges Bindemittel**
Room-temperature-curable aqueous binder
Liant aqueux durcissable à température ambiante

(30) Priorität: 03.02.1993 DE 93014449 U
(43) Veröffentlichungstag der Anmeldung: 10.08.1994
(73) Patentinhaber: Röhm GmbH, 64293 Darmstadt (DE)
(72) Erfinder: Fölsch, Karl Josef, Dr., D-55128 Mainz (DE); Kaufmann, Marita, Dr., D-64331 Weiterstadt (DE); Hartmann, Jürgen, D-64331 Weiterstadt (DE)

(56) Entgegenhaltungen:
- EP-A- 0 261 878
- EP-A- 0 384 125
- US-A- 4 544 609
- US-A- 4 605 702
- US-A- 4 965 317

## Beschreibung

Die Erfindung betrifft ein wäßriges Bindemittel, das bei Raumtemperatur vernetzbar ist, sowie dessen Anwendung als Überzugsmittel und zum Binden von festen Körpern.

### Stand der Technik

In der Anstrichtechnik werden seit jeher flüssige Überzugsmittel verwendet, die ein bei Raumtemperatur trocknendes Bindemittel enthalten. Klassische Anstrichfarben auf Ölbasis enthalten als Bindemittel trocknende Öle, die unter dem Einfluß des Luftsauerstoffes durch radikalische Polymerisation ungesättigter Molekülgruppen zu vernetzten Binderharzen aushärten. Durch die Verdunstung des Lösemittels und gleichzeitige Vernetzung bildet sich eine harte, trockene Oberfläche mit hoher Beständigkeit gegen Lösemittel.

Aus Gründen des Umweltschutzes wird zunehmend versucht, die lösemittelhaltigen Überzugsmittel durch lösemittelfreie Systeme auf wäßriger Basis zu ersetzen. Die Qualität der daraus entstehenden getrockneten Überzüge entspricht jedoch nicht derjenigen von klassischen Anstrichfarben. Die wäßrigen Überzugsmittel enthalten latexartige Bindemittel, die beim Trocknen verfilmen, jedoch nicht vernetzen. Die erhaltenen Überzüge sind oft weich und klebrig und empfindlich gegen organische Lösemittel.

Es hat nicht an Versuchen gefehlt, wäßrige Überzugsmittel herzustellen, die unter Vernetzung zu harten trockenen Filmen aushärten. Beispielsweise werden in großem Umfang selbstvernetzende Kunststoffdispersion verwendet, die Emulsionspolymerisate mit einem Gehalt an N-Methylolgruppen und gegebenenfalls zusätzlich gelöste Aminoplastharze enthalten. Sie härten jedoch erst bei erhöhten Temperaturen und werden deshalb als wäßrige Einbrennlacke bezeichnet.

Das Ziel eines bei Raumtemperatur oder wenig darüber vernetzenden wäßrigen Bindemittels ist schwierig zu verwirklichen, weil die Härtung dann schon vor der Filmbildung während der Lagerung des vernetzungsfähigen Überzugsmittels beginnt. Um dieses Problem zu umgehen, verwendet man oft Zweikomponentensysteme, bei denen bei Raumtemperatur reaktionsfähige Bindemittelkomponenten erst unmittelbar vor der Bildung einer Überzugsschicht vermischt werden, so daß sie in Form des Überzugs aushärten können. Die Verarbeitung der Zweikomponenten-Überzugsmittel erfordert besondere Beschichtungsvorrichtungen wie Zweistoffspritzpistolen mit genauen Dosiervorrichtungen für die beiden Komponenten.

In der EP-A 184 091 werden wäßrige Bindemittel für Anstrichfarben beschrieben, die sich durch eine niedrige Filmbildungstemperatur und eine hohe Blockfestigkeit der gebildeten Filme auszeichnen. Charakteristisch für dieses Bindemittel ist ein mehrstufiges Emulsionspolymerisat, dessen erste Stufe zu einem verhältnismäßig weichen Polymerisatkern und dessen zweite Stufe zu einer wesentlich härteren Polymerisatschale der Latexteilchen führen. Zum Zwecke der Vernetzung kann das Emulsionspolymerisat Einheiten von ungesättigten Carbonylverbindungen, wie Diacetonacrylamid, enthalten, die mit Dihydraziden umgesetzt werden. Zur Verbesserung der Haftung der Überzugsfilme an dem beschichteten Substrat kann das Emulsionspolymerisat weiterhin Einheiten von ungesättigten Ethylenharnstoff-Derivaten enthalten. Emulsionspolymerisate, die sowohl Einheiten von ungesättigten Carbonylverbindungen als auch solche von Ethylenharnstoff-Derivaten enthalten, werden nicht beschrieben.

US-A 4,544,609 betrifft Papierbeschichtungs-Bindemittel, die durch Umsetzung von Acrylamidpolymeren mit Glyoxal und Ethylenharnstoff erhalten werden. Die Umsetzung eines Ethylenharnstoffgruppen enthaltenden Polymeren mit Glyoxal wird nicht vorgeschlagen oder nahegelegt.

EP-A 261 878 betrifft härtbare Bindemittel, die mit Glyoxal vernetzbar sind, auf Basis von Stärke, Proteinen, Polymeren mit Amido-, substituierten Amido- oder Hydroxygruppen. Glyoxal wird in geschützter Form als Umsetzungsprodukt mit Ethylenharnstoff eingesetzt, aus dem bei erhöhter Härtungstemperatur das vernetzungswirksame Glyoxal freigesetzt wird.

US-A 4,965,317 betrifft härtbare Überzugsmittel, die neben dem Bindemittel ein harnstoffgruppenhaltiges Copolymer enthalten, das durch Umsetzung eines isocyanatgruppenhaltigen Copolymers mit Aminen entsteht. Polymere mit Ethylenharnstoffgruppen oder Dialdehyde werden nicht eingesetzt.

### Aufgabe und Lösung

Ziel der Erfindung ist ein wäßriges Bindemittel für flüssige Überzugsmittel, die gebrauchsfertig lagerfähig sind und nach der Verarbeitung zu einem Überzug bei Raumtemperatur oder nur wenig erhöhter Temperatur rasch zu einem harten, trockenen, vernetzten Film aushärten.

Gegenstand der Erfindung ist ein wäßriges Bindemittel auf Basis einer filmbildenden wäßrigen Kunststoffdispersion, enthaltend ein Emulsionspolymerisat mit polymerisierten Einheiten eines äthylenisch ungesättigten, radikalisch polymerisierbaren Monomeren mit einer seitenständigen Alkylenharnstoffgruppe, und einer Vernetzungskomponente, die wenigstens zwei gegebenenfalls geschützte Aldehydgruppen enthält, oder auf Basis einer selbstvernetzenden, filmbildenden wäßrigen Kunststoffdispersion, die ein Emulsionspolymerisat mit polymerisierten Einheiten eines äthylenisch ungesättigten, radikalisch polymerisierbaren Monomeren mit einer seitenständigen Alkylenharnstoffgruppe und mit polymerisierten Einheiten eines äthylenisch ungesättigten, radikalisch polymerisierbaren Monomeren mit wenigstens einer gegebenenfalls geschützten Aldehydgruppe enthält und frei von Dihydraziden ist.

Wäßrige Kunststoffdispersionen mit einem Gehalt an Alkylenharnstoffgruppen sind bekannt. Diese Gruppen dienen gemäß EP-A 379 892 zur Verbesserung der Haftung von Filmen, die aus den Dispersionen auf festen Substraten gebildet werden, oder gemäß EP-A 384 125 als vernetzungsreaktive Gruppe und gleichzeitig als Formaldehydfänger in selbstvernetzenden Kunststoffdispersion mit einem Gehalt an N-Methylolamidgruppen. Es war jedoch nicht bekannt, Alkylenharnstoffgruppen mittels Aldehydfunktionen zur Vernetzung zu bringen.

### Wirkungsweise der Erfindung

Die Erfindung beruht auf der Erkenntnis, daß in einem aus der Dispersion gebildeten Film die Alkylenharnstoffgruppen des Emulsionspolymerisats mit Aldehydgruppen, die gegebenenfalls auch geschützt sein können, bei Raumtemperatur oder wenig erhöhter Temperatur unter Vernetzung reagieren, während in der flüssigen Dispersion die Vernetzung bei Raumtemperatur so langsam verläuft, daß entsprechend aufgebaute Bindemittel ausreichend lagerfähig sind.

Die Alkylenharnstoffgruppen können sowohl mit mehrfunktionellen Aldehyden, die als Vernetzungskomponente wirken, als auch mit Aldehydgruppen des gleichen Polymeren reagieren. Die Chemie der Vernetzungsreaktion, das Molverhältnis der reagierenden Gruppen und die Struktur der Umsetzungsprodukte sind bisher nicht erforscht. Eine befriedigende Vernetzung wird erreicht, wenn pro Mol der Alkylenharnstoffgruppierung 1 bis 2 Mol eines Dialdehyds oder 1 bis 4 Mol polymergebundene Aldehydgruppen zur Verfügung stehen. Die Vernetzungsreaktion wird durch Säure katalysiert. pH-Werte von 1 bis 3 sind besonders vorteilhaft, jedoch wird auch bei pH-Werten bis 8 noch eine Vernetzung erreicht. Bei Temperaturen zwischen 20 und 40°C verläuft die Vernetzung mit ausreichender Geschwindigkeit. Höhere Vernetzungstemperaturen ergeben meistens keine oder unbedeutende Verbesserungen.

### Ausführung der Erfindung

Als mehrfunktionelle Aldehyde eignen sich niedermolekulare Verbindungen, insbesondere aliphatische Dialdehyde der Formel
OCH-(CH₂)ₙ-CHO, worin n eine ganze Zahl von 0 bis 8,
vorzugsweise von 0 bis 4 ist, wie Glyoxal oder Glutardialdehyd. Bevorzugt werden mehrfunktionelle Aldehyde eingesetzt, die bei der Vernetzungstemperatur wenigstens in einer Konzentration von 0,2 Mol/l in Wasser löslich sind. Man kann jedoch auch Oligomere, Polymere oder Copolymere von äthylenisch ungesättigten, radikalisch polymerisierbaren Aldehyden als Vernetzungskomponente einsetzen, vorausgesetzt, daß sie mehrere Aldehydfunktionen pro Molekül enthalten. Geeignete äthylenisch ungesättigte, radikalisch polymerisierbare Aldehyde sind z.B. Acrolein und Methacrolein. Derartige Vernetzunskomponenten können, wenn sie nicht ausreichend wasserlöslich sind, in der wäßrigen Phase der Dispersion dispergiert sein und bei der Anwendung als Bindemittel an der Filmbildung teilnehmen. Oligomere oder polymere Vernetzunskomponenten dieser Art mit einem Molekulargewicht von 1000 bis 500 000 (Gewichtsmittelwert) sind bevorzugt.

Unter geschützten Aldehydgruppen werden entsprechende Derivate verstanden, die eine vergleichbare Reaktionsfähigkeit haben wie die freie Aldehydgruppe selbst. Geeignet sind z.B. Acetale, Mercaptale und Mercaptole, Dioxolane und Dithiolane. Acetal- bzw. Dioxolangruppen, die aus der Umsetzung von Aldehydgruppen mit Alkanolen mit 1 bis 4 Kohlenstoffatomen im Alkylrest oder mit Alkandiolen mit 2 oder 3 Kohlenstoffatomen im Alkylenrest entstanden sind, werden bevorzugt. Beispiele von ungesättigten Monomeren mit geschützten Aldehydfunktionen sind Diethoxypropylacrylat und - methacrylat und Acryloyl- oder Methacryloyl-oxypropyl-1,3-dioxolan.

Wenn die Vernetzung überwiegend auf der Reaktion polymergebundener Aldehydgruppen beruht, sind diese vorzugsweise an dasselbe Emulsionspolymerisat gebunden wie die Alkylenharnstoffgruppen. In diesem Falle ist anzunehmen, daß schon vor der Filmbildung beim Lagern bei Raumtemperatur innerhalb der einzelnen Latexteilchen Vernetzung eintritt. Es wurde jedoch gefunden, daß eine ausreichende Vernetzungsfähigkeit bestehen bleibt, die mit reaktionsfähigen Gruppen an der Teilchenoberfläche erklärt werden kann.

Die Einheiten eines äthylenisch ungesättigten, radikalisch polymerisierbaren Monomeren mit einer seitenständigen Alkylenharnstoffgruppe machen in der Regel 1 bis 20 Gew.-%, vorzugsweise 2 bis 10 Gew.-%, des Emulsionspolymerisats aus. Geeignete Monomere sind z.B. N-(2-Acryloyloxyethyl)- oder (2-Methacryloyloxyethyl)-ethylenharnstoff, N-(Acrylamido-methylen)- oder N-(Methacrylamido-methylen)-ethylenharnstoff, N-Vinyl-ethylenharnstoff, N-Vinyloxyethyl-ethylenharnstoff, N-(β-Acrylamidoethyl)-ethylenharnstoff, N-(β-Methacrylamidoethyl) - ethylenharnstoff, N-[β-(Acryloyloxy-acetamido)-ethyl] - ethylenharnstoff.

Die wäßrige Kunststoffdispersion kann nach herkömmlichen Methoden der Emulsionspolymerisation hergestellt werden. Sie beruhen auf der radikalischen Polymerisation von äthylenisch ungesättigten, radikalisch polymerisierbaren Monomeren oder Monomergemischen, die einzeln oder als ganzes nur begrenzt wasserlöslich sind, so daß sich daraus in Gegenwart wasserlöslicher Emulgiermittel eine wäßrige Emulsion bereiten läßt. Durch die Einwirkung von radikalbildenden Initiatoren, die in der Regel in der wäßrigen Phase gelöst vorliegen und beim Erwärmen auf 50 bis 100°C oder unter der Einwirkung von Reduktionsmitteln Startradikale bilden, wird die Polymerisation unter Bildung einer wäßrigen Kunststoffdispersion bewirkt. Vorzugsweise wird das Zulaufverfahren angewendet, bei dem man in eine vorgelegte emulgiermittel- und initiatorhaltige Wasserphase die Monomeren als solche oder in Form einer wäßrigen Emulsion nach Maßgabe des Umsatzes zulaufen läßt. Im allgemeinen werden ein Feststoffgehalt von 30 bis 65 Gew.-% und eine Viskosität nicht über 10 000 mPa s angestrebt.

Für die Anwendung der erfindungsgemäßen Kunststoffdispersion als Bindemittel ist eine Filmbildungstemperatur zwischen 10 und 40°C, vorzugsweise 20 bis 30°C erwünscht. Damit die Dispersion bei derartigen Temperaturen zu einem geschlossenen Film trocknet, wird die Zusammensetzung des Emulsionspolymerisats in an sich bekannter Weise so gewählt, daß seine dynamische Erweichungstemperatur (T-lambda-max-Wert nach DIN 53 445) im Bereich von -20 bis 20°C liegt. Die Mindestfilmbildungstemperatur liegt vorzugsweise bei 0 bis 25°C.

Die Erweichungs- und Filmbildungstemperatur eines Emulsionspolymerisats kann in an sich bekannter Weise durch die Wahl der Art und der Menge der Hauptmonomeren auf den gewünschten Wert eingestellt werden. Als Hauptmonomere werden häufig Gemische von hartmachenden und weichmachenden Monomeren neben einem kleineren Anteil an funktionellen Monomeren eingesetzt. Typische hartmachende Monomere sind Methyl-, Ethyl-, Propyl-, Isopropyl-, Isobutyl- oder Cyclohexylmethacrylat, Styrol, Vinyltoluol, Vinylchlorid und Acryl- und Methacrylnitril. Typische weichmachende Monomere sind die Alkylester der Acrylsäure mit 1 bis 12 Kohlenstoffatomen im Alkylrest, Alkylester der Methacrylsäure mit 4 bis 12 Kohlenstoffatomen im Alkylrest, Ethylen, Butadien, Vinylacetat und Vinylidenchlorid. In vielen Fällen ist ein Anteil von 20 bis 60 Gew.-% an hartmachenden und von 40 bis 80 Gew.-% an weichmachenden Monomeren geeignet. Ein Gemisch von niederen Alkylestern der Acryl- und/oder Methacrylsäure, insbesondere mit 1 bis 4 Kohlenstoffatomen im Alkylrest, ist besonders bevorzugt.

Neben den Hauptmonomeren werden funktionelle Comonomere eingesetzt. Dazu gehören in erster Linie die ungesättigten Alkylenharnstoffderivate und gegebenenfalls ungesättigte Aldehyde als Bestandteile des Vernetzungssystems. Andere vernetzungswirksame Monomere, die unterhalb oder oberhalb der erfindungsgemäß erwünschten Vernetzungstemperatur reagieren, sind vorzugsweise abwesend. Zur Verbesserung der Stabilität der Dispersion können kleine Mengen, vorzugsweise 0,1 bis 5 Gew.-%, von äthylenisch ungesättigten, radikalisch polymerisierbaren Carbonsäuren, wie Acryl- und/oder Methacrylsäure, Malein-, Fumar- oder Itakonsäure, mitverwendet werden. Auch vernetzende Comonomere mit zwei oder mehr äthylenisch ungesättigten, radikalisch polymerisierbaren Gruppen können in geringen Mengen mitverwendet werden, wobei die Fähigkeit zur Filmbildung nicht beeinträchtigt werden darf.

Es ist bekannt, daß verschiedene Eigenschaften der Kunststoffdispersionen und der daraus gebildeten Filme vom Einbau bestimmter funktioneller Monomerer sowie von der Teilchengröße, der Teilchengrößenverteilung (uni- oder bimodal), von der Reihenfolge des Monomerzusatzes, von der Art und Menge der Emulgiermittel, vom pH-Wert, vom Elektrolytgehalt und anderen Faktoren abhängen. Um optimale Filmeigenschaften bei der Verarbeitung der erfindungsgemäßen Bindemittel zu erreichen, wird vorausgesetzt, daß diese Erkenntnisse bei der Herstellung und Anwendung der erfindungsgemäßen Kunststoffdispersionen in fachgerechter Weise berücksichtigt werden, auch soweit sie hier nicht besonders erwähnt sind.

Das Emulsionspolymerisat kann gegebenenfalls auch mehrstufig aufgebaut werden, wobei die vernetzungswirksamen Monomeren überwiegend oder ganz in der letzten Polymerisationsstufe eingesetzt werden, so daß eine in sich und mit anderen Latexteilchen vernetzbare Schale über einem unvernetzten oder auf andere Weise vernetzten Kern entsteht.

### Bindemittel

Die erfindungsgemäßen Kunststoffdispersionen können ebenso wie bekannte vernetzbare bzw. selbstvernetzende Kunststoffdispersionen als Bindemittel für feste Stoffe verwendet werden. Als feste Stoffe kommen die in Anstrichfarben, Überzugsmassen, Kunstharzputzen und dergl. gebräuchlichen Pigmente und Füllstoffe in Betracht. Sie werden mit dem Bindemittel vermischt und auf das zu beschichtende Substrat aufgetragen. Beim Trocknen entsteht ein Überzug, der je nach der herrschenden Temperatur in einigen Stunden oder Tagen vernetzt und dabei eine praktischen Anforderungen genügende Härte und Blockfestigkeit sowie Beständigkeit gegen organische Lösemittel erreicht. In der Herstellung von Überzügen und deren Aushärtung bei niedrigen Temperaturen liegt das bevorzugte Anwendungsgebiet der Erfindung. Dieser Anwendung kommt auch die haftungsverbessernde Wirkung der Alkylenharnstoffgruppen zugute.

Ein weiteres Anwendungsgebiet ist die Verfestigung von saugfähigen Papieren, Pappen, Faservliesen oder -Geweben. Zu diesem Zweck kann das Bindemittel in gewünschter Weise eingefärbt, verdickt oder geschäumt werden und durch Tränken, Rakeln, Pflatschen oder Sprühen auf oder in das zu verfestigende Substrat aufgebracht werden. Es kommen z.B. Binderauflagen zwischen 5 und 100 Gew.-% (Trocken-Gew.) in Betracht.

Wo eine Erwärmung nicht möglich oder nicht wirtschaftlich ist, kann die Vernetzung bei Raumtemperatur oder gegebenenfalls bei Temperaturen ab 10°C ablaufen. Zur Beschleunigung des Trocknens und Härtens kann auf Temperaturen von 25 bis 60°C erwärmt werden, was gegenüber bisher üblichen Härtungstemperaturen von 100 bis 150°C eine wesentliche Vereinfachung und Energieersparnis bedeutet.

### Beispiele

Die Auswirkung des erfindungsgemäßen Vernetzungssystems auf die Eigenschaften eines Filmes, der durch Eintrocknen einer Dispersionsschicht bei 40°C innerhalb von 24 Stunden entsteht, wird im Vergleich zu einer bekannten selbstvernetzenden Kunststoffdispersion auf Basis eines Emulsionspolymerisats aus Methylmethacrylat, n-Butylacrylat und etwas Methacrylsäure veranschaulicht. Die bekannte Kunststoffdispersion enthält ein Vernetzungssystem aus methyloliertem Methacrylamid. Es wurde im Sinne der Erfindung durch N-(Methacryloyloxyethyl)-ethylenharnstoff (MEEH) oder dessen Kombination mit Acrolein (ACR) bzw. mit Diethoxypropylmethacrylat (DEOPMA) ersetzt, während die Zusammensetzung der Hauptmonomeren unverändert blieb.

### A. Emulsionspolymerisation

In einem 2 l-Reaktionsgefäß mit Rückflußkühler, Rührwerk und Zulaufgefäß werden 0,54 g Ammoniumperoxodisulfat und 0,27 eines Emulgiermittels in 430 g Wasser gelöst und die Lösung auf 80°C erhitzt. Als Emulgiermittel wird ein mit der 7-fachen Molmenge Ethylenoxid umgesetztes Triisobutyl-phenol, das sulfatiert und mit Natronlauge neutralisiert ist, eingesetzt.

Unter Rühren wird eine Emulsion aus 396 g n-Butylacrylat, 292 g Methylmethacrylat, 36 g N-(2-Methacryloyloxyethyl)-ethylenharnstoff, 3,6 g Methacrylsäure, 8 g des Emulgiermittels und 665 g Wasser innerhalb 4 Stunden gleichmäßig zudosiert. Anschließend wird 30 min bei 80°C weiter gerührt und dann auf Raumtemperatur abgekühlt. Zur Polymerisation der restlichen Monomeren werden bei 65°C 0,3 g 1,4-Diisopropylbenzol-monohydroperoxid und 0,5 g Na-Hydroxymethylsulfinat als Redox-Initiator zugesetzt.

Die entstehende 40 %ige Dispersion wird filtriert. Sie hat einen pH-Wert von 2,2. Der mittlere Teilchendurchmesser (Nanosizer-Wert) beträgt 136 nm.

In entsprechender Weise werden die anderen Dispersionen für die unter B beschriebenen Untersuchungen hergestellt.

### B. Filmherstellung und Prüfung

Die zu prüfende 40-prozentige Kunststoffdispersion wird - wie in der nachfolgenden Tabelle angegeben - mit Glyoxal (GLY) oder Glutardialdehyd (GAL) als Vernetzungskomponente im angegebenen Molverhältnis (Mol MEEH : Mol CH₂O-Gruppen) vermischt und 1 Std. gerührt. Bei einigen Ansätzen wurde vor der Zugabe der Vernetzungskomponente der pH-Wert mit Ammoniak bzw. mit p-Toluolsulfonsäure verändert.

Mittels einer Rakel wird eine etwa 0,1 mm dicke Schicht der Kunststoffdispersion auf eine teflonbeschichtete Glasplatte aufgestrichen und über Nacht in einem Trockenschrank bei 40°C zu einem klaren Film getrocknet.

Anschließend wird der Film von der Glasplatte abgezogen. Zum Vergleich wird ein weiterer Film 15 min bei 140°C getrocknet.

Zur Prüfung der Vernetzung wird ein 10 cm² großes Filmstück 24 Stunden bei Raumtemperatur in Tetrahydrofuran gequollen, nach dem Herausnehmen freie Flüssigkeit abgetupft und die Gewichtszunahme geprüft. Nach dem Verdunsten des aufgenommenen Tetrahydrofurans wird der Gewichtsverlust bestimmt, der auf unvernetzte, lösliche Polymerisatanteile zurückgeht. Berücksichtigt werden nur Proben, bei denen der Gewichtsverlust unter 10 Gew.-% liegt.

Quellungswerte unter 250 % lassen auf eine befriedigende, unter 200 % auf eine gute Vernetzung schließen.

| Ergebnistabelle: | | | |
|---|---|---|---|
| Untersuchte Dispersion | pH | Quellungwerte in % | |
| | | 40°C | 140°C |
| Vergleichsdispersion mit Methylolamidvernetzung | 3,0 | 410 | 216 |

| Erfindungsgemäße Dispersionen | | | |
|---|---|---|---|
| 5 Gew.-% MEEH + Glyoxal 1:2 | 2,3 | 205 | 220 |
| 5 Gew.-% MEEH + Glyoxal 1:2 | 1,5 | 207 | 223 |
| 5 Gew.-% MEEH + Glyoxal 1:2 | 9,1 | 312 | 295 |
| 5 Gew.-% MEEH + Glyoxal 1:1 | 2,3 | 200 | 205 |
| 5 Gew.-% MEEH + Glyoxal 1:1 | 4,4 | 242 | 212 |
| 5 Gew.-% MEEH + Glyoxal 1:1 | 7,3 | 265 | 223 |
| 5 Gew.-% MEEH + Glyoxal 1:1 | 8,1 | 278 | 233 |
| 8 Gew.-% MEEH + Glyoxal 1:2 | 2,3 | 175 | 161 |
| 8 Gew.-% MEEH + Glyoxal 1:1 | 2,4 | 205 | 220 |
| 5 Gew.-% MEEH + GAL 1:2 | 2,3 | 259 | 262 |
| 5 Gew.-% MEEH + GAL 1:2 | 1,5 | 209 | 217 |
| 10 G% MEEH, 1,9 G% ACR 1:0,7 | 2,3 | 126 | 119 |
| 10 G% MEEH, 2,8 G% ACR 1:1,0 | 2,3 | 130 | 117 |
| 10 G% MEEH, 4,2 G% ACR 1:1,5 | 2,4 | 174 | 129 |
| 5 G% MEEH, 5,5 G% DEOPMA 1:1 | 2,3 | 145 | 141 |

| Erfindungsgemäße Dispersion mit allylfunktionellem Ethylenharnstoff-Derivat (ALEH, Handelsprodukt Sipomer^{(R)} WAM, Alcolac) | | | |
|---|---|---|---|
| 5 Gew.-% ALEH + Glyoxal 1:1 | 2,4 | 335 | 351 |

## Patentansprüche

1. Wäßriges Bindemittel auf Basis einer filmbildenden wäßrigen Kunststoffdispersion und einer Vernetzungskomponente,
dadurch gekennzeichnet,
daß die Kunststoffdispersion ein Emulsionspolymerisat mit polymerisierten Einheiten eines äthylenisch ungesättigten, radikalisch polymerisierbaren Monomeren mit einer seitenständigen Alkylenharnstoffgruppe und die Vernetzungskomponente wenigstens zwei gegebenenfalls geschützte Aldehydgruppen enthält.

2. Wäßriges Bindemittel auf Basis einer selbstvernetzenden, filmbildenden wäßrigen Kunststoffdispersion
dadurch gekennzeichnet,
daß die Kunststoffdispersion ein Emulsionspolymerisat mit polymerisierten Einheiten eines äthylenisch ungesättigten, radikalisch polymerisierbaren Monomeren mit einer seitenständigen Alkylenharnstoffgruppe und mit polymerisierten Einheiten eines äthylenisch ungesättigten, radikalisch polymerisierbaren Monomeren mit wenigstens einer gegebenenfalls geschützten Aldehydgruppe enthält und frei von Dihydraziden ist.

3. Wäßriges Bindemittel nach Anspruch 1 oder 2, dadurch gekennzeichnet, daß die geschützten Aldehydgruppen in Form eines Acetals, Mercaptals oder Mercaptols vorliegen.

4. Wäßriges Bindemittel nach einem oder mehreren der Ansprüche 1 bis 3, dadurch gekennzeichnet, daß das Emulsionspolymerisat 1 bis 20 Gew.-% der polymerisierten Einheiten eines äthylenisch ungesättigten, radikalisch polymerisierbaren Monomeren mit einer seitenständigen Alkylenharnstoffgruppe enthält.

5. Wäßriges Bindemittel nach einem oder mehreren der Ansprüche 1 bis 4, dadurch gekennzeichnet, daß das Emulsionspolymerisat polymerisierte Einheiten von N-(2-Acryloyloxyethyl)- oder (2-Methacryloyloxyethyl)-ethylenharnstoff enthält.

6. Wäßriges Bindemittel nach einem oder mehreren der Ansprüche 1 und 3 bis 5, dadurch gekennzeichnet, daß die Vernetzungskomponente wenigstens in einer Konzentration von 0,2 Mol/l wasserlöslich ist.

7. Wäßriges Bindemittel nach Anspruch 6, dadurch gekennzeichnet, daß die Vernetzungskomponente ein aliphatischer Dialdehyd der Formel OCH-(CH₂)ₙ-CHO ist, worin n eine ganze Zahl von 0 bis 8 ist.

8. Wäßriges Bindemittel nach einem oder mehreren der Ansprüche 1 und 3 bis 7, dadurch gekennzeichnet, daß die Vernetzungskomponente ein Polymerisat ist, das aus polymerisierten Einheiten eines äthylenisch ungesättigten, radikalisch polymerisierbaren Monomeren mit einer gegebenenfalls geschützten Aldehydgruppe besteht.

9. Wäßriges Bindemittel Anspruch 8, dadurch gekennzeichnet, daß die Vernetzungskomponente ein Polymerisat mit einem Molekulargewicht von 1000 bis 500 000 ist.

10. Wäßriges Bindemittel nach einem oder mehreren der Ansprüche 1 bis 9, dadurch gekennzeichnet, daß es eine Filmbildungstemperatur zwischen 10 und 40 °C besitzt.

## Claims

1. An aqueous binding agent based on a film-forming, aqueous plastic dispersion and a cross-linking component, characterised in that the plastic dispersion comprises an emulsion polymer with polymerised units of an ethylenically unsaturated, radically polymerisable monomer with an alkylene urea side chain, and that the cross-linking component comprises at least two, optionally protected, aldehyde groups.

2. An aqueous binding agent based on a cross-linking, film-forming, aqueous plastic dispersion, characterised in that the plastic dispersion comprises an emulsion polymer with polymerised units of an ethylenically unsaturated, radically polymerisable monomer having an alkylene urea side chain and with polymerised units of an ethylenically unsaturated, radically polymerisable monomer having at least one optionally protected aldehyde group, and is free from dihydrazides.

3. An aqueous binding agent according to claim 1 or 2, characterised in that the protected aldehyde groups are in the form of an acetal, mercaptal or mercaptol.

4. An aqueous binding agent according to one or more of claims 1 to 3, characterised in that the emulsion polymer comprises 1 to 20 wt.% of polymerised units of an ethylenically unsaturated, radically polymerisable monomer having an alkylene urea side chain.

5. An aqueous binding agent according to one or more of claims 1 to 4, characterised in that the emulsion polymer comprises polymerised units of N-(2-acryloyloxyethyl)- or (2-methacryloyloxyethyl)-ethylene urea.

6. An aqueous binding agent according to one or more of claims 1 and 3 to 5, characterised in that the cross-linking component is soluble in water in a concentration of at least 0.2 mol/l.

7. An aqueous binding agent according to claim 6, characterised in that the cross-linking component is an aliphatic dialdehyde of formula OCH-(CH₂)ₙ-CHO wherein n is an integer of 0 to 8.

8. An aqueous binding agent according to one more of claims 1 and 3 to 7, characterised in that the cross-linking component is a polymer which comprises polymerised units of an ethylenically unsaturated, radically polymerisable monomer with an optionally protected aldehyde group.

9. An aqueous binding agent according to claim 8, characterised in that the cross-linking component is a polymer with a molecular weight of 1,000 to 500,000.

10. An aqueous binding agent according to one or more of claims 1 to 9, characterised in that it has a film-forming temperature of between 10 and 40°C.

## Revendications

1. Liant aqueux à base d'une dispersion aqueuse filmogène de matière plastique et d'un composant de réticulation, caractérisé en ce que la dispersion de matière plastique contient un produit de polymérisation en émulsion comportant des motifs polymérisés d'un monomère à insaturation éthylénique, susceptible de polymérisation radicalaire, renfermant un groupement alkylène-urée latéral, et le composant réticulant contient au moins deux groupements aldéhyde éventuellement protégés.

2. Liant aqueux à base d'une dispersion aqueuse filmogène autoréticulante de matière plastique, caractérisé en ce que la dispersion de matière plastique contient un produit de polymérisation en émulsion comportant des motifs polymérisés d'un monomère à insaturation éthylénique, susceptible de polymérisation radicalaire, renfermant un groupement alkylène-urée latéral et des motifs polymérisés d'un monomère à insaturation éthylénique, susceptible de polymérisation radicalaire, renfermant au moins un groupement aldéhyde éventuellement protégé, et en ce qu'elle est dépourvue de dihydrazides.

3. Liant aqueux selon la revendication 1 ou 2, caractérisé en ce que les groupements aldéhyde protégés se présentent sous la forme d'un acétal, d'un mercaptal ou d'un mercaptol.

4. Liant aqueux selon l'une quelconque des revendications 1 à 3, caractérisé en ce que le produit de polymérisation en émulsion contient 1 à 20% en poids des motifs polymérisés d'un monomère à insaturation éthylénique, susceptible de polymérisation radicalaire, renfermant un groupement alkylène-urée latéral.

5. Liant aqueux selon l'une quelconque des revendications 1 à 4, caractérisé en ce que le produit de polymérisation en émulsion contient des motifs polymérisés de N-(2-acryloyloxyéthyl)- ou (2-méthacryloyloxyéthyl)-éthylène-urée.

6. Liant aqueux selon l'une quelconque des revendications 1 et 3 à 5, caractérisé en ce que le composant de réticulation est soluble dans l'eau en une concentration d'au moins 0,2 mole/l.

7. Liant aqueux selon la revendication 6, caractérisé en ce que le composant de réticulation est un dialdéhyde aliphatique de formule OCH-(CH₂)ₙ-CHO, dans laquelle n est un nombre entier de 0 à 8.

8. Liant aqueux selon l'une quelconque des revendications 1 et 3 à 7, caractérisé en ce que le composant de réticulation est un polymère qui se compose de motifs polymérisés d'un monomère à insaturation éthylénique, susceptible de polymérisation radicalairte, renfermant un groupement aldéhyde éventuellement protégé.

9. Liant aqueux selon la revendication 8, caractérisé en ce que le composant de réticulation est un polymère ayant un poids moléculaire de 1000 à 500 000.

10. Liant aqueux selon l'une quelconque des revendications 1 à 9, caractérisé en ce qu'il a une température de formation du film entre 10 et 40°C.
